# EUROPÄISCHE PATENTANMELDUNG

(11) **EP 2 015 154 A1**
(43) Veröffentlichungstag der Anmeldung: **14.01.2009**
(21) Anmeldenummer: 07013409.3
(22) Anmeldetag: 09.07.2007
(51) Int. Cl.: G05B 19/05, G05B 9/02

(54) **Verfahren zum Betrieb eines Automatisierungsgerätes mit konfigurierbarem Abschaltmodus**

(71) Anmelder: SIEMENS AKTIENGESELLSCHAFT, 80333 München (DE)
(72) Erfinder: Hubert, Johannes, 90471 Nürnberg (DE); Weber, Uwe, 90542 Eckental (DE)

(57) **Zusammenfassung**

Es wird ein Verfahren zum Betrieb eines Automatisierungsgerätes, das zur Steuerung oder Überwachung eines externen technischen Prozesses (24) eine mehrere Prozesse (32, 34, 36) umfassende Automatisierungslösung (26) ausführt, wobei der Betrieb des Automatisierungsgerätes und die Ausführung der Automatisierungslösung (26) überwacht wird und im Fehlerfall ein diesbezüglicher Systemfehler (64) signalisiert wird, angegeben, bei dem zum Einen für die Automatisierungslösung (26) ein Abschaltmodus (70) projektiert ist, der entweder einen Wert für ein sofortiges Abschalten des technischen Prozesses (24) im Falle eines Systemfehlers (64) oder für ein partielles Abschalten des technischen Prozesses (24) im Falle eines Systemfehlers (64) annehmen kann, bei dem zum Anderen für jeden Prozess (32-36) eine lokale Fehlervariable (66) verwaltet wird, in die in Abhängigkeit vom Abschaltmodus (70) ein eventueller Systemfehler (64) übernommen wird und bei dem schließlich in Abhängigkeit vom Wert der lokalen Fehlervariablen (66) eine Übertragung von Steuersignalen an den technischen Prozess (24) möglich ist oder unterbunden wird.

## Beschreibung

Die Erfindung betrifft ein Verfahren zum Betrieb eines Automatisierungsgerätes gemäß dem Oberbegriff des Anspruchs 1.

Automatisierungsgeräte der im Oberbegriff des Anspruchs 1 angegebenen Art sind an sich bekannt und werden im Folgenden vor dem Hintergrund, dass die Automatisierungslösung insbesondere zumindest teilweise fehlersicher ausgeführte Anwenderprogramme umfassen kann, als Sicherheitssteuerung bezeichnet.

Nachteilig bei diesem bekannten Automatisierungsgeräten der Eingangs genannten Art ist jedoch, dass im Fehlerfalle zwar ein im Folgenden als "sofortiges Abschalten" bezeichnetes Überführen des technischen Prozesses in einen sicheren Zustand möglich ist, dass aber mit dem Einleiten des sicheren Zustands eine sonstige Beeinflussbarkeit des technischen Prozesses verloren geht. Das Überführen in den sicheren Zustand kann zum Schutz von Umwelt und Bedienpersonal das Schließen eines Ventils bewirken, so dass ein unkontrollierter Produkttransport unterbunden wird. Allerdings kann, wenn ein Produkt auf diese Weise in Ruhe gerät, eine Leitung verstopfen oder ein Zwischen- oder Ausgangsprodukt unbrauchbar werden. In diesem Sinne ist eine Vielzahl weiterer Beispiele denkbar.

Eine Aufgabe der Erfindung besteht entsprechend darin, die o.g. Nachteile zu vermeiden oder zumindest deren Auswirkungen dadurch zu reduzieren, dass neben dem sofortigen Abschalten auch ein im Folgenden als "partielles Abschalten" bezeichnetes Überführen des technischen Prozesses in den sicheren Zustand möglich ist, wobei eine Beeinflussbarkeit des technischen Prozesses erhalten bleibt, indem z.B. nur von der Fehlersituation direkt betroffene Prozesse an einer Ausgabe von Steuersignalen an den technischen Prozess gehindert sind während nicht betroffene Prozesse weiterhin ausgeführt werden und auch Steuersignale an den technischen Prozess ausgeben können um z.B. einen Teilprozess abzuschließen ein dabei insbesondere Leitungen und dergleichen leer zu fahren.

Diese Aufgabe wird erfindungsgemäß mit den Merkmalen des Anspruchs 1 gelöst. Dazu ist bei einem Verfahren zum Betrieb eines Automatisierungsgerätes, das zur Steuerung oder Überwachung eines externen technischen Prozesses eine mehrere Prozesse umfassende Automatisierungslösung ausführt, wobei der Betrieb des Automatisierungsgerätes und die Ausführung der Automatisierungslösung überwacht wird und im Fehlerfall ein diesbezüglicher Systemfehler signalisiert wird, vorgesehen, dass für die Automatisierungslösung ein Abschaltmodus projektiert ist, der entweder einen Wert für ein sofortiges Abschalten des technischen Prozesses im Falle eines Systemfehlers oder für ein partielles Abschalten des technischen Prozesses im Falle eines Systemfehlers annehmen kann, wobei für jeden Prozess eine lokale Fehlervariable verwaltet wird, in die in Abhängigkeit vom Abschaltmodus ein eventueller Systemfehler übernommen wird und wobei in Abhängigkeit vom Wert der lokalen Fehlervariablen eine Übertragung von Steuersignalen an den technischen Prozess möglich ist oder unterbunden wird.

Die Erfindung geht dabei von der Erkenntnis aus, dass eine Automatisierungslösung in Ansehung des jeweils zu steuernden und/oder zu überwachenden technischen Prozesses sinnvoll in logische Abschnitte, hier und im Folgenden als Prozess oder Ablaufgruppe bezeichnet, unterteilt werden kann. Dies vor allem vor dem Hintergrund, dass eine solche logische Unterteilbarkeit häufig auch für den jeweiligen technischen Prozess gegeben ist, derart, dass dieser als eine Kombination technischer Teilprozesse aufgefasst werden kann. Eine einfache Aufteilung der Automatisierungslösung in Prozesse könnte also die Unterteilung des technischen Prozesses in technische Teilprozesse widerspiegeln. Bisherige Sicherheitssteuerungen streben bei Vorliegen eines Systemfehlers einen sicheren Zustand an, wobei mit dessen Erreichen die sonstige Ausführung der Automatisierungslösung angehalten wird und entsprechend ein Eingriff in den technischen Prozess nicht mehr möglich ist. Dies berücksichtigt aber nicht, dass trotz des Systemfehlers einzelne technische Teilprozesse möglicherweise ohne Probleme durch den jeweiligen Prozess als Bestandteil der Automatisierungslösung gesteuert und/oder überwacht werden können. An die Stelle der Abschaltung der gesamten Automatisierungslösung tritt also entsprechend dem Ansatz gemäß der Erfindung eine bedarfsindizierte Abschaltung (partielle Abschaltung) einzelner von der Automatisierungslösung umfasster Prozesse. Von der Abschaltung nicht betroffene Prozesse können weitestgehend unbeeinflusst von der Systemfehlersituation weiterlaufen. Nachdem die Erfindung jedoch nicht ein Steuerungs- oder Überwachungsverfahren für einzelne konkrete technische Prozesse sondern ein Verfahren zum Betrieb eines Automatisierungsgerät vorschlägt, das die oben beschriebene und nachfolgend weiter erläuterte Form der Abschaltung unterstützt, muss auch eine Auswahlmöglichkeit zur Beibehaltung der bekannten Abschaltform gegeben sein. Dazu ist der Abschaltmodus vorgesehen, der durch eine der Automatisierungslösung zugängliche Variable realisiert und z.B. bei der Erstellung der Automatisierungslösung mit einem Wert entsprechend der jeweils gewünschten Abschaltform, also entweder sofortiges Abschalten oder partielles Abschalten, projektiert sein kann.

Der Vorteil der Erfindung besteht in der Bereitstellung eines Abschaltmodus, bei dem der technische Prozess zumindest teilweise noch durch die jeweilige Automatisierungslösung steuer- und/oder überwachbar bleibt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn für jeden Prozess ein Abschaltbit verwaltet wird, das im Falle eines Fehlers bei der Abarbeitung des Prozesses gesetzt wird und im Fehlerfalle eine Übertragung von Steuersignalen an den technischen Prozess unterbindet, wird neben der Auswertung des Systemfehlers ein zweiter Abschaltweg geschaffen, durch z.B. bei der Ausführung eines technischen Prozesses eine Ausgabe von Steuersignalen an den technischen Prozess verhindert wird, wenn es während der Ausführung des Prozesses zu einer Fehlersituation kommt.

Neben der Überwachung des Automatisierungsgerätes und der Automatisierungslösung auf das eventuelle Vorliegend von Systemfehlern wird gemäß einer vorteilhaften Ausführungsform der Erfindung vorgeschlagen, die Ausführung der Automatisierungslösung dadurch zu überwachen, dass überprüft wird, ob alle von der Automatisierungslösung umfassten Prozesse zur Ausführung gelangen und/oder ob durch Prozesse, die ihrerseits Unterprogramme oder dergleichen aufrufen, alle gemäß der Definition des Prozesses aufzurufenden Unterprogramme auch tatsächlich zur Ausführung gelangen.

Dazu ist im Hinblick auf die Überprüfung, ob alle von der Automatisierungslösung umfassten Prozesse zur Ausführung gelangen, vorgesehen, dass für die Automatisierungslösung in Ansehung der bei der Erstellung der Automatisierungslösung bekannten Anzahl davon umfasster Prozesse eine Gesamtprozessanzahl projektiert und während einer zyklischen Ausführung der Automatisierungslösung für jeden Zyklus ein Prozessausführungszähler zunächst initialisiert und bei jeder Ausführung eines Prozesses inkrementiert wird und dass zum Ende eines jeden Zyklus der Wert des Prozessausführungszählers mit der projektierten Gesamtprozessanzahl verglichen und im Falle einer Abweichung der Systemfehler gesetzt wird.

Zusätzlich oder alternativ ist im Hinblick auf die Überprüfung, ob alle gemäß der Definition eines Prozesses aufzurufenden Unterprogramme auch tatsächlich zur Ausführung gelangen, vorgesehen, dass für jeden Prozess in Ansehung der bei der Erstellung der Automatisierungslösung bekannten Anzahl davon jeweils aufzurufender Unterprogramme eine Gesamtunterprogrammanzahl projektiert und bei Ausführung des Prozesses ein Unterprogrammausführungszähler zunächst initialisiert und bei jeder Ausführung eines Unterprogramms inkrementiert wird und dass zum Ende der Ausführung des Prozesses der Wert des Unterprogrammausführungszählers mit der projektierten Gesamtunterprogrammanzahl verglichen und im Falle einer Abweichung der Systemfehler gesetzt wird.

Für beide beschriebenen Szenarien gilt, dass im Falle eines gesetzten Systemfehlers dieser je nach Abschaltmodus in die lokale Fehlervariable übernommen wird und nach deren Zustand das Absetzen von Steuersignalen an den technischen Prozess entweder zugelassen oder unterbunden wird, wie oben bereits beschrieben. Des Weiteren gilt für beide beschriebenen Szenarien, dass anstelle einer Inkrementierung des jeweiligen Zählers bei entsprechender Anpassung der jeweiligen Initialisierung auch eine Dekrementierung erfolgten kann.

Nachdem das oben skizzierte und nachfolgend weiter erläuterte Verfahren bevorzugt in Software ausgeführt ist, betrifft die Erfindung auch ein Computerprogramm mit durch einen Computer ausführbaren Programmcodeanweisungen zur Implementierung des Verfahrens wenn das Computerprogramm auf einem Computer ausgeführt wird und ein Computerprogrammprodukt, insbesondere Speichermedium, mit einem durch einen Computer ausführbaren derartigen Computerprogramm.

Des Weiteren betrifft die Erfindung auch ein Automatisierungsgerät mit einem Speicher, in dem ein solches Computerprogramm vorgehalten oder in den ein solches transferierbar ist, und mit einer Verarbeitungseinheit, die im Betrieb des Automatisierungsgeräts durch Zugriff auf den Speicher das Computerprogramm ausführt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Darin zeigen
- FIG 1: eine schematisch vereinfachte Darstellung einer Sicherheitssteuerung,
- FIG 2: eine exemplarische Darstellung einer durch die Sicherheitssteuerung ausführbaren, Prozesse umfassenden Automatisierungslösung, wobei jeder Prozess Unterprogramme aufrufen kann,
- FIG 3: in einem der Sicherheitssteuerung zugeordneten Speicher angelegte Variable zur Erkennung einer Fehlersituation und zur Einleitung einer Systemabschaltung im Fehlerfall abhängig von einem für die Systemabschaltung projektierbaren Abschaltmodus und
- FIG 4: ein Struktogramm zur Erläuterung einer Verarbeitung der Variablen im Falle einer Fehlersituation und bei der Systemabschaltung.

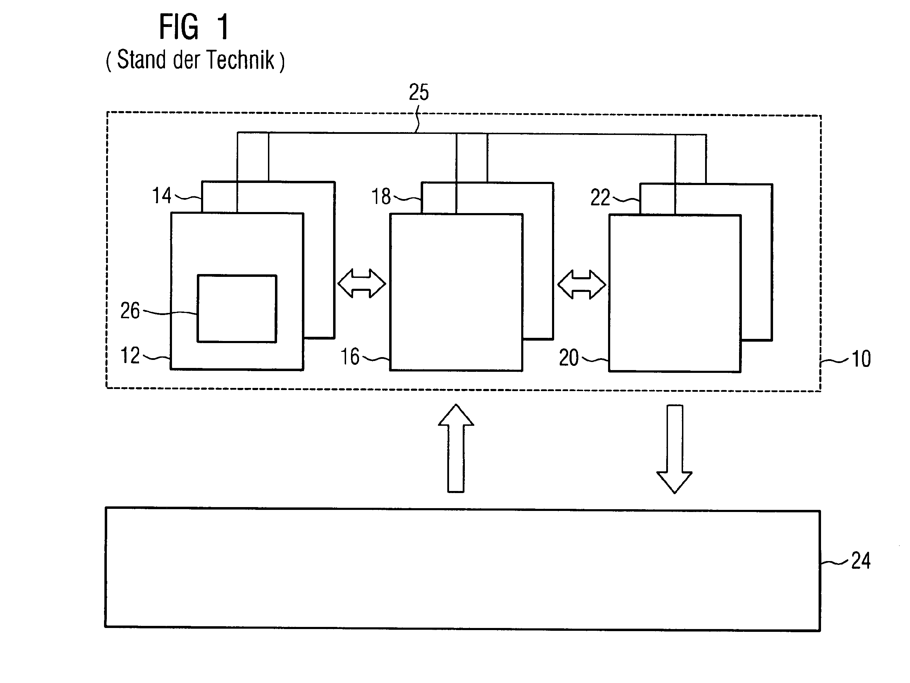

FIG 1 zeigt in schematisch vereinfachter Darstellung als Automatisierungsgerät eine Sicherheitssteuerung 10, die in FIG 1 als zweikanalig-redundant ausgeführt gezeigt ist. Dazu umfasst die Sicherheitssteuerung 10 zwei redundante Zentraleinheiten 12, 14, zumindest zwei redundante Eingabebaugruppen 16, 18 und zumindest zwei redundante Ausgabebaugruppen 20, 22.

Die Sicherheitssteuerung 10 ist zur Steuerung und/oder Überwachung eines nicht näher dargestellten technischen Prozesses 24 vorgesehen. Dazu werden aus dem technischen Prozess 24 mittels der Eingabebaugruppen 16, 18 Prozesszustände aufgenommen und an den technischen Prozess 24 mittels der Ausgabebaugruppen 20, 22 Steuerungssignale abgegeben. Die Komponenten der Sicherheitssteuerung 10 sind für einen Datenaustausch untereinander, aber auch für eine Systemprüfung, insbesondere einen Redundanztest, in an sich bekannter Art und Weise, z.B. über ein internes Bussystem 25, verbunden. Sicherheitssteuerungen 10 der in FIG 1 dargestellten Art sind an sich bekannt.

Die Sicherheitssteuerung 10 führt mittels der redundanten Zentraleinheiten 12, 14 und einer jeweils dort vorgehaltenen Verarbeitungsfunktionalität, z.B. in Form eines Prozessors oder dergleichen, eine Automatisierungslösung 26 aus, durch die in grundsätzlich an sich bekannter Art und Weise festgelegt ist, wie die Sicherheitssteuerung 10 die Steuerung und/oder Überwachung des technischen Prozesses 24 vornimmt. Dabei können die beiden Zentraleinheiten 12, 14 jeweils eine identische Automatisierungslösung 26 oder diversitäre Automatisierungslösungen (nicht separat dargestellt) ausführen, derart, dass in einer Zentraleinheit 12 die Ermittlung gleicher Ergebnisse wie in der komplementären Zentraleinheit 14 angestrebt wird, dies jedoch auf einem anderen Weg erfolgt.

Hinsichtlich einer eventuellen Diversität gilt Gleiches für die oder jede Ein- oder Ausgabebaugruppe 16, 18; 20, 22.

Das wesentliche Merkmal bei einer Sicherheitssteuerung 10, wie in FIG 1 dargestellt, besteht darin, dass diese durch den zweikanalig-redundanten Aufbau zum Erreichen der erforderlichen Fehlersicherheit beim Steuern sicherheitskritischer technischer Prozesse ertüchtigt ist. Dazu erfolgt eine gegenseitige Überwachung der Zentraleinheiten 12, 14 und ein diesbezüglicher Datenaustausch. Während der Ausführung der Automatisierungslösung 26 werden also z.B. dauerhaft oder zu vorgegebenen oder vorgebbaren Zeitpunkten, insbesondere vor der Ausgabe des so genannten Prozessabbilds der Ausgänge, also vor der Übermittlung von Steuersignalen durch die oder jede Ausgabebaugruppe 20, 22 an den technischen Prozess 24, Systemtests durchgeführt und im Fehlerfalle vordefinierte Maßnahmen, wie z.B. die Abschaltung des technischen Prozesses 24, eingeleitet.

Eine Abschaltung des technischen Prozesses 24 meint dabei dessen Überführung in einen definierten sicheren Zustand, weil Abschaltung ansonsten z.B. bedeuten könnte, dass ein Ventil spannungslos wird und entsprechend geöffnet bleibt, so dass in unerwünschter Weise eine kontinuierliche Materialzufuhr erfolgt. Allerdings gibt es Anwendungsfälle, insbesondere im Falle technischer Prozesse 24 in der chemischen Industrie, bei denen auch die sofortige Überführung in einen sicheren Zustand Nachteile mit sich bringen kann, weil z.B. durch das Schließen von Ventilen und die damit an sich gewünschte Unterbindung von Materialfluss Leitungen verstopfen können usw. Die sofortige Überführung in einen sicheren Zustand, die im Folgenden kurz als "sofortige Abschaltung" bezeichnet wird, verhindert zwar Gefahren für Mensch und Natur, es kann jedoch ein erheblicher Sachschaden entstehen, z.B. durch Zerstörungen in der Anlage, etwa verstopfte Leitungen, unbrauchbare Ausgangs- und Zwischenprodukte oder hohe Kosten durch Stillstandszeiten, wenn sich durch Beseitigung von Schäden der eingangs genannten Art der Wiederanlauf des technischen Prozesses 24 verzögert.

Der Ansatz gemäß der Erfindung zielt dementsprechend darauf ab, unter Beibehaltung der zu fordernden Sicherheit für Bedienpersonal und Umwelt eine Abschaltmöglichkeit zu realisieren, die Eingriffe in den technischen Prozess 24 weiterhin zulässt, so dass auf diese Art und Weise ein zur Unterscheidung von der sofortigen Abschaltung als partielles Abschalten bezeichnetes Herunterfahren des technischen Prozesses 24 oder einzelner Teilprozesse im technischen Prozess 24 möglich ist.

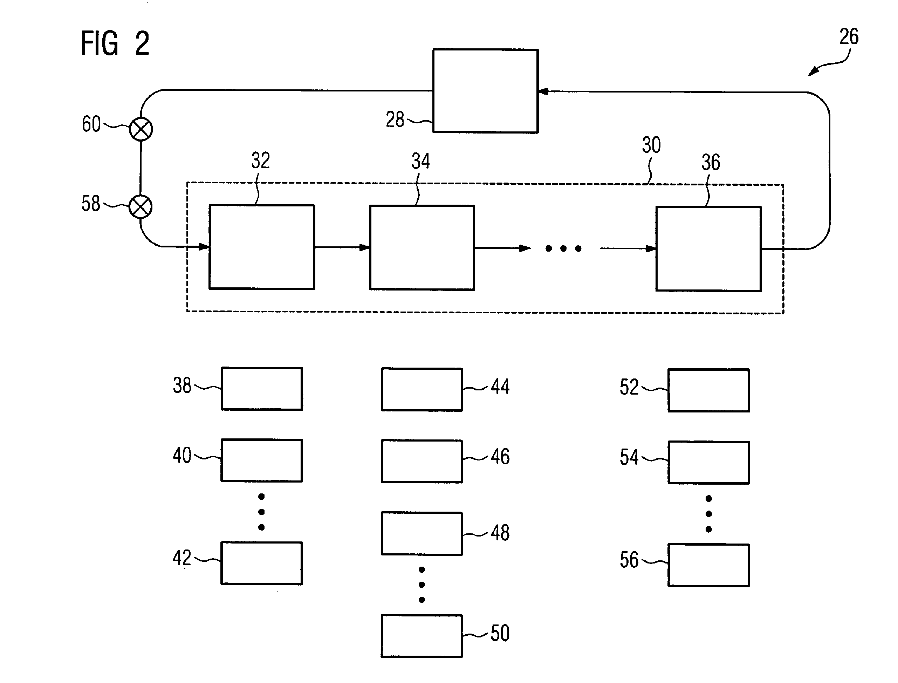

Dazu ist vorgesehen, dass bei der in FIG 2 mit weiteren Details dargestellten Automatisierungslösung 26, die einen nicht fehlersicheren Programmteil 28 umfassen kann und zumindest einen fehlersicheren Programmteil 30 umfasst, der fehlersichere Programmteil 30 zumindest zwei Prozesse 32, 34, 36 umfasst, die nach Art einer so genannten Task in einem eigenen Zeitraster und grundsätzlich unabhängig von weiteren Prozessen 32-36 und dem eventuellen nicht fehlersicheren Programmteil 28 ablaufen. Der evtl. nicht fehlersichere Programmteil 28 wird im Folgenden auch als Anwenderprogramm 28 bezeichnet. Der fehlersichere Programmteil oder die davon umfassten Prozesse 32-36 werden im Folgenden auch als F-Programm bezeichnet. Insgesamt ist die Automatisierungslösung 26 so ausgelegt, dass eine an sich bekannte zyklische Abarbeitung erfolgt, derart, dass während der Dauer einer so genannten Zykluszeit jeder Prozess 32-36 zumindest einmal aufgerufen und ausgeführt wird und dass während der Zykluszeit die Bearbeitung des eventuellen nicht fehlersicheren Programmteils 28 abgeschlossen wird. Eine die vorgegebene Zykluszeit überschreitende Bearbeitungsdauer bei der Ausführung der Prozesse 32-36 oder des nicht fehlersicheren Programmteils 28 führt zu einer so genannten Zykluszeitüberschreitung und wird als Fehler ausgewertet, der normalerweise zu einer sofortigen Abschaltung in der oben beschriebenen Weise führt.

Jeder Prozess 32-36 kann bei seiner Ausführung ein oder mehrere Unterprogramme 38, 40, 40, 42; 44, 46, 48, 50; 52, 54, 56 ausführen. Die Ausführung solcher Unterprogramme 38-56 verlängert naturgemäß die Bearbeitungsdauer des jeweiligen Prozesses 32-36 und bei der Zykluszeitüberwachung wird überprüft, dass die sich insgesamt ergebende Bearbeitungsdauer die vorgegebene Zykluszeit nicht überschritten wird. Für eine Sicherheitssteuerung 10 (vgl. FIG 1) in Form einer speicherprogrammierbaren Steuerung bietet sich als Realisierungsform für die Prozesse 32-36 als Bestandteil der Automatisierungslösung 26 jeweils ein so genannter Organisationsbaustein (kurz "OB") an, dessen Ausführung durch so genannte Weckalarme gesteuert wird. Das heißt, bei als Organisationsbausteinen realisierten Prozessen 32-36 wird das Zeitraster, in dem diese ausgeführt werden, durch die Definition der jeweiligen Weckalarme festgelegt. Im Folgenden wird der oder jeder Prozess 32-36, ggf. in Kombination mit den davon aufgerufenen oder aufzurufenden Unterprogrammen 38-56, auch als Ablaufgruppe bezeichnet und die für Prozesse 32-36 eingeführte Bezugsziffer verwendet.

Nicht dargestellt in FIG 2 ist, dass ein Betriebssystem der jeweiligen Zentraleinheit 12, 14 (vgl. FIG 1) oder eine einem Betriebssystem vergleichbare Funktionalität entweder permanent oder zu vorgegebenen oder vorgebbaren Zeitpunkten die Ausführung der Automatisierungslösung 26 überwacht. Wenn während der zyklischen Ausführung der Automatisierungslösung 26 ein Zeitpunkt als Zyklusbeginn 58 und ein anderer Zeitpunkt als Zyklusende 60 aufgefasst wird, erfolgt z.B. üblicherweise im Zusammenhang mit dem Zyklusbeginn 58 die Übernahme des so genannten Prozessabbilds der Eingänge und im Zusammenhang mit dem Zyklusende 60 die Ausgabe des so genannten Prozessabbilds der Ausgänge. Als Überwachung der Automatisierungslösung 26 ist dann zumindest vorgesehen, dass das Prozessabbild der Ausgänge nur transferiert wird, wenn in den redundanten Ausgabebaugruppen 20, 22 gleiche Zustände anstehen. Wenn nämlich z.B. bei der Abarbeitung der Automatisierungslösung 26 durch eine der Zentraleinheiten 12 sich in der der jeweiligen Zentraleinheit 12 zugehörigen Ausgabebaugruppe 20 ein Zustand einstellt, der z.B. einen dem technischen Prozess 24 zugehörigen Motor (nicht separat dargestellt) abschaltet, während bei Ausführung der komplementären Automatisierungslösung 26 durch die redundante Zentraleinheit 14 in der dieser Zentraleinheit 14 zugeordneten Ausgabebaugruppe 22 ein Zustand einstellt, der denselben Motor einschalten würde, liegt im Bereich der Sicherheitssteuerung 10 ein Fehler vor, also z.B. ein Fehler in der Automatisierungslösung 26, oder ein Fehler bei der Datenübertragung innerhalb der Sicherheitssteuerung 10 oder ein technischer Fehler in der Ausgabebaugruppe 20, 22. Auch ein solcher Fehler führt bei bisher bekannten Ausführungen von Sicherheitssteuerungen 10 zum sofortigen Abschalten der oben beschriebenen Art.

Der zuletzt beschriebene Fehler wird im Folgenden kurz als Redundanzfehler bezeichnet und mit einem Fehler, der sich z.B. aus der Detektion einer Zykluszeitüberschreitung, wie oben beschrieben, ergibt, unter dem Begriff "Systemfehler" zusammengefasst.

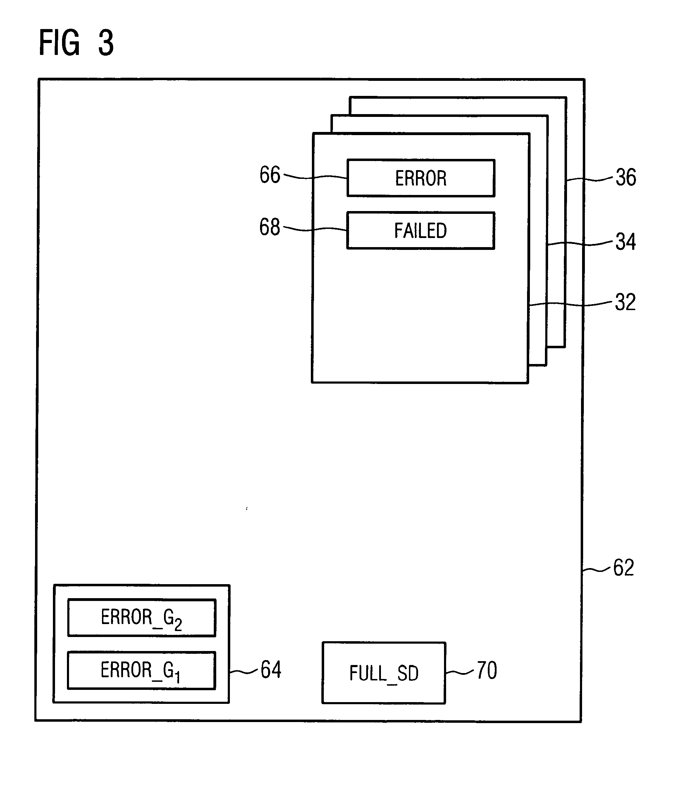

In FIG 3 ist schematisch vereinfacht dargestellt, dass zur Speicherung eines eventuellen Systemfehlers in einem von jeder Zentraleinheit 12, 14 in an sich bekannter Art und Weise umfassten Speicher 62 eine im Folgenden als Systemfehlervariable 64 bezeichnete Variable definiert ist, deren Wert das Vorliegen oder Nichtvorliegen eines Systemfehlers angibt. Die Systemfehlervariable 64 ist redundant ausgeführt, d.h. zum Setzen oder Zurücksetzen der Systemfehlervariable 64 wird auf zwei davon umfasste Daten (ERROR_G₁, ERROR_G₂) zugegriffen. Die Systemfehlervariable 64 ist also ein zusammengesetzter Datentyp, der die Variablen ERROR_G₁, ERROR_G₂ umfasst, die ggf. diversitär ausgeführt sein müssen, d.h. ERROR_G₁ ist z.B. vom Typ "BOOLEAN" und ERROR_G₂ ist vom Typ "WORD". Die Auswertung der Systemfehlervariablen 64 erfordert insoweit stets die Auswertung beider davon umfasster Variablen, also z.B. deren UND-Verknüpfung (ERROR_G = (ERROR_G₁ UND ERROR_G₂). Auf einen jeweiligen Wert der Systemfehlervariablen 64 wird im Folgenden unter der Bezeichnung Systemfehler Bezug genommen und dabei auch das für die Systemfehlervariable 64 definierte Bezugszeichen verwendet.

Gleichfalls in FIG 3 dargestellt sind schematisch vereinfacht die von der Automatisierungslösung 26 (FIG 2) umfassten Ablaufgruppen 32-36, nachdem die davon umfassten Programmcodeanweisungen ebenfalls in dem Speicher 62 hinterlegt sind. Die Programmcodeanweisungen der Ablaufgruppen 32-36 sind nicht dargestellt. Dargestellt ist jedoch, dass jeder Ablaufgruppe 32-36 zwei Variable 66, 68 zugeordnet sind. In einer ersten Variable 66 wird lokal für die jeweilige Ablaufgruppe 32-36 die Bedeutung eines eventuellen Systemfehlers 64 für diese Ablaufgruppe 32, 34, 36 berücksichtigt. Die erste Variable 66 wird entsprechend auch als lokale Fehlervariable 66 bezeichnet. Mit einem jeweiligen Wert der zweiten Variable 68 wird ein Abschaltbit realisiert, so dass auf die zweite Variable 68 im Folgenden auch unter der Bezeichnung Abschaltbit 68 und der gleichen Bezugsziffer Bezug genommen wird.

Schließlich ist in FIG 3 noch dargestellt, dass vom Speicher 62 eine weitere Variable 70 zur Realisierung einer Auswahlmöglichkeit hinsichtlich des Abschaltmodus umfasst ist. Der Inhalt dieser weiteren Variablen 70 wird im Folgenden unter der Bezeichnung Abschaltmodus 70 referenziert und es wird auch das ansonsten für diese weitere Variable 70 verwendete Bezugszeichen übernommen. Als Abschaltmodus 70 kommt entweder das sofortige Abschalten ("Full-Shutdown") oder ein partielles Abschalten von F-Ablaufgruppen in Betracht.

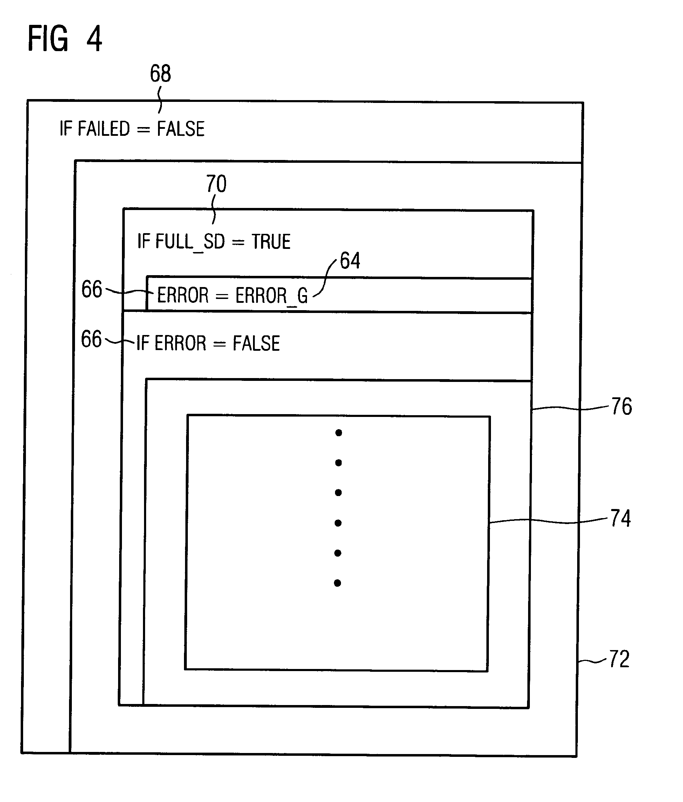

Anhand von FIG 4 wird mittels eines schematisch vereinfachten Struktogramms 72 die Auswertung der zuvor erläuterten Variablen 64, 66, 68, 70 erläutert. Programmcodeanweisungen einer jeden Ablaufgruppe 32-36, insbesondere Programmcodeanweisungen zur Übertragung von Steuersignalen an den technischen Prozess 24, sind als innerster 74 Block dargestellt. Vor Ausführung dieser Programmcodeanweisungen wird überprüft, ob das Abschaltbit 68, in FIG 4 auch durch den Bezeichner "FAILED" dargestellt, gesetzt ist. Zu einer Ausführung des innersten Blocks 74 kann es nur kommen, wenn das Abschaltbit 68 nicht gesetzt ist, wenn also gilt "FAILED = FALSE" Diese erste Überprüfung kann nach dem Aufruf der jeweiligen Ablaufgruppe 32-36 erfolgen. Es kann jedoch auch vorgesehen sein, dass diese Überprüfung dem Aufruf der Ablaufgruppe 32-36 vorgelagert ist, so dass, wenn das Abschaltbit 68 gesetzt ist, die jeweilige Ablaufgruppen 32-36 gar nicht erst aufgerufen oder gar nicht erst eingeplant wird. Um dies zu verdeutlichen, umfasst das Struktogramm 72 auch einen inneren Block 76, der funktional im Wesentlichen mit der Darstellung eines Prozesses 32-36 in FIG 2 oder FIG 3 korrespondiert. Zu Beginn des jeweiligen Prozesses 32-36 wird zunächst geprüft, welcher Abschaltmodus 70, hier auch durch den Bezeichner "FULL_SD" dargestellt, projektiert ist. Nur wenn durch eine entsprechende Projektierung des Abschaltmodus 70 eine sofortige Abschaltung vorgesehen ist (FULL_SD = TRUE), wird als Wert für die lokale Fehlervariable 66 ein eventueller Systemfehler 64 übernommen. Anschließend wird durch Überprüfung der lokalen Fehlervariable 66 sichergestellt, dass eine Ausführung der vom innersten Block 74 umfassten Programmcodeanweisungen nur erfolgt, wenn kein für die Ablaufgruppe 32-36 relevanter Fehler vorliegt.

Wenn als Abschaltmodus 70 ein sofortiges Abschalten (FULL_SD = TRUE) projektiert ist, wird als lokaler Fehler 66 stets der Systemfehler 64 ("ERROR = ERROR_G") übernommen, so dass bei Anstehen eines Systemfehlers 64 die Ausführung zumindest des innersten Blocks 74, also der davon umfassten Programmcodeanweisungen aller Ablaufgruppe 32-36, sicher unterbunden ist.

Ist dagegen als Abschaltmodus 70 ein partielles Abschalten projektiert (FULL_SD = FALSE), hat ein eventuelles Anstehen eines Systemfehlers 64 auf die Ausführbarkeit der äußeren Programmblöcke keinen Einfluss. Solange nicht gleichzeitig der lokale Fehler 66 ansteht kann auch der innerste Block 74 weiter ausgeführt werden. Ein dort implementiertes so genanntes F-Programm kann entsprechend weiter ausgeführt werden. Es wird aber die Ausführung des inneren Programmblocks 74 und dort implementierter Programmcodeanweisungen sicher unterbunden, wenn aus sonstigen Gründen der lokale Fehler 66 ansteht. Wenn also für eine oder mehrere Ablaufgruppen 32-36 weder das Fehlerbit 68 gesetzt ist noch der lokale Fehler 66 ansteht, können diese Ablaufgruppen und dort implementierte Programmcodeanweisungen weiter ausgeführt werden, so dass auf diesem Wege das partielle Abschalten realisiert wird.

Auch wenn ein technischer Prozess partiell abgeschaltet wird, liegt dennoch eine Fehlersituation vor, mit der geeignet umzugehen ist. Zu diesem Zweck kann durch das Anwenderprogramm 28 (FIG 1) ein kontrolliertes Herunterfahren realisiert werden. Das Anwenderprogramm 28 kann unabhängig von dem F-Programm reagieren. Dazu kann im Anwenderprogramm 28 der Wert der Systemfehlervariablen 64 ausgelesen werden und in Abhängigkeit vom Status der Systemfehlervariablen 64 z.B. zu Programmteilen des Anwenderprogramms 28 verzweigt werden, mit denen ein solches kontrolliertes Herunterfahren realisiert ist. Die sichere Abschaltung von Anlagenteilen, die potentiell Gefahren für Umwelt und/oder Bedienpersonal darstellen können wird durch die zumindest partielle Abschaltung des F-Programms (im Falle von FULL_SD = FALSE) oder durch die komplette Abschaltung des F-Programms (im Falle von FULL_SD = TRUE) gewährleistet.

Das Abschaltbit 68 wird im Falle eines Fehlers bei der Ausführung der jeweiligen Ablaufgruppe 32-36 gesetzt, so dass die Ausführung der Ablaufgruppe 32-36 oder zumindest die Ausgabe von Steuersignalen durch die jeweilige Ablaufgruppe 32-36 an den gesteuerten oder überwachten technischen Prozess 24 verhindert wird.

Neben z.B. einer Zykluszeitüberschreitung oder Redundanzfehlern als Ursache für das Anstehen eines Systemfehlers 64 sind gemäß vorteilhafter Ausführungsformen der Erfindung weitere Überwachungen vorgesehen, die ebenfalls dazu führen können, dass der Systemfehler 64 gesetzt wird. Dazu ist einerseits vorgesehen, dass, nachdem für die Automatisierungslösung 26 bei deren Erstellung bekannt ist, wie viele Prozesse 32-36 davon umfasst sind, die Gesamtanzahl der Prozesse 32-36 oder Ablaufgruppen 32-36 als Gesamtprozessanzahl in einer Variablen hinterlegt wird und für jeden Zyklus nach einer entsprechenden Initialisierung bei Ausführung jeweils einer Ablaufgruppe 32-36 ein Prozessausführungszähler (nicht dargestellt) inkrementiert wird. Wenn am Ende eines Zyklus der Wert des Prozessausführungszählers mit der projektierten Anzahl der von der Automatisierungslösung 26 umfassten Ablaufgruppen 32-36 übereinstimmt, steht fest, dass in dem jeweiligen Zyklus alle Ablaufgruppen 32-36 bestimmungsgemäß zur Ausführung gelangt sind. Ergibt sich dagegen bei dem Vergleich eine Abweichung, liegt eine Fehlersituation vor, weil entweder eine der Ablaufgruppen 32-36 nicht oder eine Ablaufgruppe 32-36 mehrfach ausgeführt worden ist. In beiden Fällen wird in Abhängigkeit von dem durchzuführenden Vergleich der beiden Variablen der Systemfehler 64 gesetzt, so dass sich durch die Auswertung gemäß der Darstellung in FIG 4 und in Abhängigkeit vom projektierten Abschaltmodus 70 eine Verhinderung der Ausführung einzelner oder aller Ablaufgruppen 32-36 ergibt.

Zusätzlich oder alternativ kann vorgesehen sein, nachdem bei der Erstellung der Automatisierungslösung 26 in gleicher Art und Weise bekannt ist, wie viele Unterprogramme 38-56 (FIG 2) ein Prozess 32-36 aufruft, dass für jeden Prozess 32-36 oder jede Ablaufgruppe 32-36 ein diesbezüglicher Wert als Gesamtunterprogrammanzahl projektiert ist und bei der Ausführung einer Ablaufgruppe 32-36 ein zunächst auf einen Startwert initialisierter Unterprogrammausführungszähler (nicht dargestellt) beim Aufruf eines jeden Unterprogramms 38-56 inkrementiert wird. Zum Ende der Ausführung der Ablaufgruppe 32-36 kann dann durch Vergleich des Zählerstandes mit dem projektierten Wert ermittelt werden, ob alle aufzurufenden Unterprogramme 38-56 auch tatsächlich aufgerufen wurden. Ergibt sich bei dem Vergleich eine Abweichung, liegt erneut eine Fehlersituation vor, die dazu führt, dass der Systemfehler 64 gesetzt wird.

Es wird ein Verfahren zum Betrieb eines Automatisierungsgerätes, das zur Steuerung oder Überwachung eines externen technischen Prozesses 24 eine mehrere Prozesse 32, 34, 36 umfassende An Automatisierungslösung 26 ausführt, wobei der Betrieb des Automatisierungsgerätes und die Ausführung der Automatisierungslösung 26 überwacht wird und im Fehlerfall ein diesbezüglicher Systemfehler 64 signalisiert wird, angegeben, bei dem zum Einen für die Automatisierungslösung 26 ein Abschaltmodus 70 projektiert ist, der entweder einen Wert für ein sofortiges Abschalten des technischen Prozesses 24 im Falle eines Systemfehlers 64 oder für ein partielles Abschalten des technischen Prozesses 24 im Falle eines Systemfehlers 64 annehmen kann, bei dem zum Anderen für jeden Prozess 32-36 eine lokale Fehlervariable 66 verwaltet wird, in die in Abhängigkeit vom Abschaltmodus 70 ein eventueller Systemfehler 64 übernommen wird und bei dem schließlich in Abhängigkeit vom Wert der lokalen Fehlervariablen 66 eine Übertragung von Steuersignalen an den technischen Prozess 24 möglich ist oder unterbunden wird.

## Patentansprüche

1. Verfahren zum Betrieb eines Automatisierungsgerätes, das zur Steuerung oder Überwachung eines externen technischen Prozesses (24) eine mehrere Prozesse (32, 34, 36) umfassende Automatisierungslösung (26) ausführt,
wobei der Betrieb des Automatisierungsgerätes und die Ausführung der Automatisierungslösung (26) überwacht wird und im Fehlerfall ein diesbezüglicher Systemfehler (64) signalisiert wird,
**dadurch gekennzeichnet,**
**dass** für die Automatisierungslösung (26) ein Abschaltmodus (70) projektiert ist, der entweder einen Wert für ein sofortiges Abschalten des technischen Prozesses (24) im Falle eines Systemfehlers (64 oder für ein partielles Abschalten des technischen Prozesses (24) im Falle eines Systemfehlers (64) annehmen kann,
**dass** für jeden Prozess (32-36) eine lokale Fehlervariable (66) verwaltet wird, in die in Abhängigkeit vom Abschaltmodus (70) ein eventueller Systemfehler (64) übernommen wird und
**dass** in Abhängigkeit vom Wert der lokalen Fehlervariablen (66) eine Übertragung von Steuersignalen an den technischen Prozess (24) möglich ist oder unterbunden wird.

2. Verfahren nach Anspruch 1, wobei für jeden Prozess (32-36) ein Abschaltbit (68) verwaltet wird, das im Falle eines Fehlers bei der Abarbeitung des Prozesses (32-36) gesetzt wird und im Fehlerfalle eine Übertragung von Steuersignalen an den technischen Prozess (24) unterbindet.

3. Verfahren nach Anspruch 1 oder 2, wobei für die Automatisierungslösung (26) in Ansehung der bei der Erstellung der Automatisierungslösung (26) bekannten Anzahl davon umfasster Prozesse (32-36) eine Gesamtprozessanzahl projektiert und während einer zyklischen Ausführung der Automatisierungslösung (26) für jeden Zyklus ein Prozessausführungszähler zunächst initialisiert und bei jeder Ausführung eines Prozesses inkrementiert wird und wobei zum Ende eines jeden Zyklus der Wert des Prozessausführungszählers mit der projektierten Gesamtprozessanzahl verglichen und im Falle einer Abweichung der Systemfehler (64) gesetzt wird.

4. Verfahren nach Anspruch 1 oder 2, wobei für jeden Prozess (32-36) in Ansehung der bei der Erstellung der Automatisierungslösung (26) bekannten Anzahl davon jeweils aufzurufender Unterprogramme (38-56) eine Gesamtunterprogrammanzahl projektiert und bei Ausführung des Prozesses (32-36) ein Unterprogrammausführungszähler zunächst initialisiert und bei jeder Ausführung eines Unterprogramms (38-56) inkrementiert wird und wobei zum Ende der Ausführung des Prozesses (32-36) der Wert des Unterprogrammausführungszählers mit der projektierten Gesamtunterprogrammanzahl verglichen und im Falle einer Abweichung der Systemfehler (64) gesetzt wird.

5. Computerprogramm mit durch einen Computer ausführbaren Programmcodeanweisungen zur Implementierung des Verfahrens nach einem der Ansprüche 1 bis 4 wenn das Computerprogramm auf einem Computer ausgeführt wird.

6. Computerprogrammprodukt, insbesondere Speichermedium, mit einem durch einen Computer ausführbaren Computerprogramm gemäß Anspruch 5.

7. Automatisierungsgerät mit einem Speicher, in dem ein Computerprogramm gemäß Anspruch 5 vorgehalten ist oder in den ein solches Computerprogramm transferierbar ist, und mit einer Verarbeitungseinheit, die im Betrieb des Automatisierungsgeräts durch Zugriff auf den Speicher das Computerprogramm ausführt.
